# EUROPEAN PATENT APPLICATION

(11) **EP 1 129 966 A1**
(43) Date of publication of application: **05.09.2001**
(21) Application number: 00200604.7
(22) Date of filing: 22.02.2000
(51) Int. Cl.: B65G 15/02, B65G 15/46

(54) **Belt conveyor**

(71) Applicant: Ammeraal International B.V., 1704 AC Heerhugowaard (NL)
(72) Inventor: Roet, Simon Jacobus, 1768 AH Barsingerhorn (NL); Honeycutt, James ray, Grandville, Michigan 49418 (US)
(74) Representative: Volmer, Johannes Cornelis

(57) **Abstract**

A belt conveyor (20) comprises a frame (32) wherein at least A two support rolls for supporting a laterally curved endless conveyor belt (22) are disposed. The laterally curved endless conveyor belt (22) carries on at least one of its surfaces a guiding bead (10; 28, 30) disposed at or adjacent the outer peripheral edge thereof. Furthermore the belt conveyor (20) comprises one or more bearing rolls (44) for bearing the guiding bead (10; 28, 30). According to the invention the guiding bead (10; 28, 30) is a coextruded layered bead comprising a base layer (12) of a base layer material which is fastened to the conveyor belt (22) and a top layer (14) of a top layer material which is flexible and wear resistant. Preferably the base layer (12) is thermoplastically bonded to a top cover (26) of the conveyor belt (22). If necessary the base layer (12) is melted into a supporting bottom fabric (24) of the conveyor belt (22). The top layer material comprises preferabl a thermoplastic rubber or copolymer.

## Description

The invention relates to a belt conveyor comprising a frame wherein at least two support rolls for supporting a laterally curved endless conveyor belt are disposed, the laterally curved endless conveyor belt carrying on at least one of its surfaces a guiding bead disposed at or adjacent the outer peripheral edge thereof, and one or more bearing rolls for bearing the guiding bead.

Such a belt conveyor is generally known in the art, e.g. from EP-A-0 566 837. A belt conveyor of this type, also known as a round belt, is used to carry its load around a curved path, for example a turn of 90° or even 180°. The guiding bead has the function to maintain the conveyor belt in its proper position. In fact the bearing rolls, which are disposed at regular intervals along the outer circumference of the conveyor belt and fixed to the frame of the belt conveyor, exert an outwardly directed force onto the guiding bead.

In an embodiment of the belt conveyor according to the above mentioned European patent application 0 566 837 the bearing rolls comprise a first bearing roll which contacts the inclined inner face of the guiding bead and a second bearing roll for pressing against an upper flat surface of the guiding bead. The first bearing roll is positioned such that it does not contact the upper surface of the conveyor belt and thus damage to the conveyor belt is prevented. Information about the bonds between the guiding bead and the conveyor belt is not provided.

Several types of guiding beads are known in the art, each having its own configuration and consequently its own way of fastening to the conveyor belt. EP-A-0 349 830 discloses a guiding bead, which in cross-section has a thickened end part provided with an inwardly and horizontally extending groove limited by said end part and two horizontal protrusions. The thickened, preferably oval end part is contacted by two bearing rolls, which are disposed above and below the conveyor belt at an angle with respect to the belt surface. This guiding bead is known in the art as the "large bead". A socalled "small bead" having the thickened part at the inner end is shown in the drawing of DE-A-23 44 476. Other guiding beads similar to the large bead are disclosed in JP-A-07/323907, JP-A-08/081027, JP-A-08/319013 and JP-A-08/319014.

In practice the guiding beads are glued to the edge of the belt and then sewn in place. Usually three rows of continuous stitching through the conveyor belt and the protrusions along the outside circumference of the belt are used to reinforce the adhesion properties of the glue. Other fastening means include e.g. a heat activated adhesive, which is used alone or in combination with stitching.

The material most frequently used for the guiding bead is polyurethane having a durometer from 60 to 70 Shore A. Polyurethane is tear resistant, tough and reasonably flexible at 70 Shore A.

When stitching is used, the stitching process actually weakens the performance of the bead material, such as polyurethane. The holes, which are punched through the bead during stitching, are a source of failure, e.g. upon aging the holes may cause stress fractures in the material. The formation of these stress fractures or cracks is accelerated during use of the belt conveyor, e.g. by wear from the bearing rolls, stress applied by belt tension and by repeatedly flexing over the end pulleys or other supporting rolls. Once the stress cracks have migrated about 1 mm, they will have reached the next hole in the bead. This crack propagation occurs reasonably fast and once several holes have been connected by one or more cracks, the whole seam begins to fail, in which case the conveyor belt needs to be replaced by a new one. However, the belt conveyors of this type are not easily accessible for service and repair. Furthermore initially a fresh guiding bead usually does not have a shape, which matches the contacting surface of the bearing rolls. Thus in the beginning the guiding bead goes through a socalled wear-in period, during which a significant portion of the bead is worn off, until the bead conforms to the contacting surface of the bearing rolls. Because heat is generated in a considerable amount during this wear-in period, aging, cracking, fracturing and at last failure are accelerated thereby. Contact between the stitching and the bearing rolls, for example as a result of excessive wear in the case of the large bead configuration, should be avoided, because the stitching will be destroyed almost immediately. In the case of the small bead configuration contact between the stitching and the bearing rolls is not possible at all, and therefore the service life of this type of guiding bead is improved compared to the large bead configuration. However, a wear-in period is still present, which has the abovementioned drawbacks. The major disadvantage of the small bead configuration is that the bearing rolls are allowed to contact the upper surface of the conveyor belt at a position inwardly of the guiding bead, i.e. just beyond the bead in the direction of the center of the curve. The bearing rolls will wear away the belt surface as the belt travels through the return section of the conveyor. This wear (pattern) together with the cracking of the bead causes failure of the bead itself, as well as failure of the fastening (adhesion) of the bead to the conveyor belt. Although the service life of guiding beads can be increased generally by avoiding stitching, problems related to the wear-in period will occur.

In general it can be said that the properties of a guiding bead, which is manufactured from a single material, are not sufficient with respect to both wear resistance and adhesion, given the materials presently employed for the conveyor belt and the bearing rolls.

Thus there is an ever continuing need for improving the guiding beads according to the state of the art in terms of service life, in particular wear and fastening characteristics.

In the belt conveyor of the nature mentioned above according to the invention the guiding bead is a co-extruded layered bead comprising a base layer of a base layer material which is fastened to the conveyor belt and a top layer of a top layer material which is flexible and wear resistant.

The use of a co-extruded layered bead according to the invention allows to select each component of the guiding bead based upon the demands to which it will be subjected, and thus to maximise the performance of the guiding bead. In particular it offers the freedom of selecting the best base layer material for adhesion to the conveyor belt, and selecting the best top layer material for flexibility, wear resistance and durability. Thereby it is possible to avoid the problems associated with the use of a single material bead according to the state of the art as described above.

The selection of the base layer material will depend, among others, from the type of conveyor belt material to which this base layer material is to be bonded and the nature of the bonding to be achieved. Usually the conveyor belt comprises at least a cover layer made from polyurethane, polyvinylchloride and the like, and a supporting bottom fabric. Preferably the base layer of the guiding bead according to the invention is thermoplastically bonded to the top cover of the conveyor belt. The firm bond thus obtained does not degrade with use. No adhesive or stitching is required. If the bottom side of the conveyor belt has to be guided as well, preferably the base layer material of the guiding bead according to the invention is melted locally, whereupon some base layer material flows into the fabric and after curing a firm bond between the bottom fabric and the bead is established. Suitable base layer materials comprise melt processable rubbers and thermoplastic elastomers. A preferred base layer material is a thermoplastic polyester polymer, e.g. the Hytrel® grades available from DuPont. These polyester polymers have a relatively low melt temperature of approximately 170°C, which allows an easy application to the bottom fabric of a conveyor belt by melting. Furthermore it can be thermoplastically bonded to the cover materials presently employed in conveyor belts of this type such as polyvinylchloride and polyurethane.

Preferably the top layer material, which of course is co-extrudable with the base layer material, is a thermoplastic rubber or co-polymer. Advantageously the top layer material has a Shore A hardness in the range of 60-90, more preferably approximately 70 - 80. Such a material is tough enough to withstand the abuse of the application. The hardness and thickness of the top layer material will be chosen such that the guiding bead as a whole has sufficient flexibility in the running direction in order to allow the bead to run over the pulleys of the conveyor without any significant increase in tension. Lateral flexibility is also required otherwise the guiding bead can not be bend according to the curvature (radius) of the conveyor belt. A preferred material for the top layer is Alcryn® , available from Advanced Polymer Alloys, which is very well co-extrudable with the Hytrel® polyester. This material does not age harden as the polyurethane materials do. The surface friction characteristic of this material is sufficient to enable a good grip to the bearing rolls. Other materials which are co-extrudable with Hytrel® comprise inter alia polyvinylchloride, polybutadiene terephthalate and polyethylene terephthalate.

If necessary, a suitable intermediate layer may be present which allows to utilize a base layer material and top layer material which are not normally considered to be directly compatible with each other.

The co-extrudate may comprise usual additives, such as discolouring antioxidants, fillers, provided that the functional properties of each of the layers of the guiding bead according to the invention are not adversely effected.

In order to distribute the forces which occur during bending around pulleys it is preferred that the thickness ratio of the top layer to the base layer in the body of the guiding bead is at least 2. Having a thick top layer allows the entire layer to share the shear stresses through its thickness and thereby placing less stress on the top surface of the top layer material.

Advantageously the shape of the bead, in particular the top layer, is matched to the shape and angle of the bearing surface of the bearing rolls, such that no initial wear-in occurs. Thereby excessive generation of heat and aging of the guiding bead are prevented. Furthermore it is preferred that the shape is such that the top cover of the conveyor belt is protected from wear due to contact with the bearing rolls. Such a protection can be provided by a part of the bead, which extends beyond the bearing roll.

In a preferred embodiment the guiding bead has an inwardly facing surface, which is inclined with respect to the surface of the conveyor belt, and which surface is in contact with a contacting area of a bearing roll. The bead also comprises a projection which extends beyond the contacting area of a bearing roll in the direction of the inner periphery of the conveyor belt.

Hot air and pressure can be used to apply the guiding bead to one or both of the conveyor belt surfaces in an accurate and repeatable way. The top and bottom beads end up in exactly the same curve relative to the curvature of the conveyor belt. Another possibility includes the use of HF. The guiding bead may be used with lacing as it may be skived down to the belt surface on the leading and trailing edges of the lace joint, thereby avoiding the need of on-site fabrication. A butt joint - another initial position for bead failure -, as required by the above small and large bead configuration at the start and stopping positions, can also be avoided in the present invention.

The present invention also relates to a guiding bead, obviously intended for use in the belt conveyor according to the invention, as defined in claims 9-14.

The invention will be further illustrated by means of the accompanying drawing, wherein:
Fig. 1 shows a schematic view of an embodiment of a guiding bead according to the invention; and
Fig. 2 shows a schematic cross-section of an embodiment of a belt conveyor according to the invention.

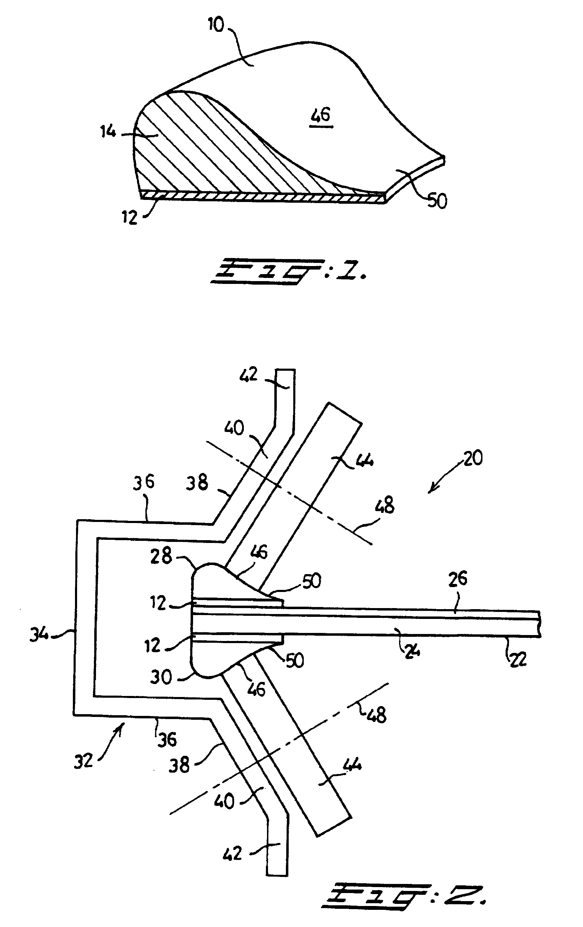

Fig. 1 shows a guiding bead 10, which comprises a base layer 12 of a thermoplastic elastomer, such as Hytrel® polyester, and a top layer 14 of a co-extrudable flexible and wear resistant material, such as Alcryn® . The thickness of the top layer 14 in the body of the bead 10 is considerably higher than the thickness of the base layer 12 in order to dissipate the forces exerted during use. The guiding bead 10 has a shape which is adapted to the bearing surface and angle of the bearing rolls, by which the bead 10 will be engaged during use. This shape will be explained in more detail hereinafter referring to fig. 2.
Fig. 2 shows a belt conveyor, indicated by reference numeral 20. The belt conveyor 20 comprises an endless conveyor belt 22. The conveyor belt 22 has a supporting bottom fabric 24 and a top cover 26 as is usual in the art. An upper bearing guide 28 is disposed at the outer periphery of the conveyor belt 22. The base layer 12 of the upper guiding bead 28 is thermoplastically bonded to the top cover 26 of the conveyor belt 22. A similar bottom bearing guide 30 is also arranged at the outer periphery of the conveyor belt 22 opposite to the upper bearing guide 28. This bottom bearing guide 30 is attached to the bottom fabric 24 by exposing the base layer 12 to a temperature of approximately the melting point. The melted base layer material flows into the fabric 24 and forms a bonding upon cooling. In the embodiment shown a frame 32 of the belt conveyor 20 includes an U-profile section 34, of which the legs 36 each have an end part 38. The end parts 38 each include an inclined section 40 and a generally vertical end section 42. The end sections 42 of the end parts extend in opposite vertical directions. Bearing rolls 44 are inclinedly arranged with respect to the horizontal part of the conveyor belt 22 in a manner known per se. A bearing surface of bearing rolls 44 contacts a contacting surface 46 (see also fig. 1) of the top layer 14 of the guiding bead 10. The top layer 14 has a generally triangular shape. As can be seen, the contacting surface 46 has been provided with the same angle as the axis of rotation (indicated by 48) of the bearing rolls 44. As also can be seen from this fig. 2, the the relatively thin base layers 12 of the guiding beads 28 and 30 respectively are approximately parallel to the respective surfaces of the conveyor belt 22. In order to protect the surfaces of the conveyor belt 22 from wear by the bearing rolls 44 the guiding beads 28 and 30 each have a small extension 50 directed towards the center of the curvature of the belt 22, which comprises both of the base and top layers 12 and 14 for adhesion, respectively wear resistance and flexibility.

## Claims

1. A belt conveyor (20) comprising a frame (32) wherein at least two support rolls for supporting a laterally curved endless conveyor belt (22) are disposed, the laterally curved endless conveyor belt (22) carrying on at least one of its surfaces a guiding bead (10; 28, 30) disposed at or adjacent the outer peripheral edge thereof, and one or more bearing rolls (44) for bearing the guiding bead (10; 28, 30), **characterized in that** the guiding bead (10; 28, 30) is a coextruded layered bead comprising a base layer (12) of a base layer material which is fastened to the conveyor belt (22) and a top layer (14) of a top layer material which is flexible and wear resistant.

2. A belt conveyor according to claim 1, **characterized in that** the base layer (12) is thermoplastically bonded to a top cover (26) of the conveyor belt (22).

3. A belt conveyor according to claim 1 or 2, **characterized in that** the base layer (12) is melted into a supporting bottom fabric (24) of the conveyor belt (22).

4. A belt conveyor according to any one of the preceding claims, **characterized in that** the base layer material is a thermoplastic polyester elastomer.

5. A belt conveyor according to any one of the preceding claims, **characterized in that** the top layer material is a thermoplastic rubber or copolymer.

6. A belt conveyor according to any one of the preceding claims, **characterized in that** the thickness ratio of the top layer (14) to the base layer (12) in the body of the guiding bead (10; 28, 30) is at least 2.

7. A belt conveyor according to any one of the preceding claims, **characterized in that** the guiding bead (10; 28, 30) has an inwardly facing surface (46), which is inclined with respect to the surface of the conveyor belt (22), and which surface (46) is in contact with a contacting area of a bearing roll (44).

8. A belt conveyor according to any one of the preceding claims, **characterized in that** the guiding bead (10; 28, 30) comprises a projection (50) which extends beyond the contacting area of a bearing roll (44) in the direction of the inner periphery of the conveyor belt (22).

9. A guiding bead (10; 28, 30), obviously intended for a belt conveyor (2) according to any one of the preceding claims, **characterizes in that** the guiding bead (10; 28, 30) is a coextruded layered bead comprising a base layer (12) of a base layer material which is fastenable to a conveyor belt (22) and a top layer (14) of a top layer material which is flexible and wear resistant.

10. A guiding bead according to claim 9, **characterized in that** the base layer material comprises a melt processable rubber or thermoplastic elastomer.

11. A guiding bead according to claim 9 or 10, **characterized in that** the base layer material is a thermoplastic polyester elastomer.

12. A guiding bead according to any one of the preceding claims 9-11, **characterized in that** the top layer material is a thermoplastic rubber or copolymer.

13. A guiding bead according to any one of the preceding claims 9-12, **characterized in that** the guiding bead (10; 28, 30) has a contacting surface (46), which is inclined with respect to the base layer (12) of the guiding bead (10; 28, 30).

14. A guiding bead according to any one of the preceding claims 9-13, **characterized in that** the guiding bead (10; 28, 30) comprises a projection (50).
